# FASCICULE DE BREVET EUROPEEN

(11) **EP 0 611 213 B1**
(45) Date de publication et mention de la délivrance du brevet: **06.08.1997**
(21) Numéro de dépôt: 94400289.8
(22) Date de dépôt: 10.02.1994
(51) Int. Cl.: C03C 17/36

(54) **Substrats en verre revetus d'un empilement de couches minces, application à des vitrages à propriétés de réflexion dans l'infra-rouge et/ou à propriétés dans le domaine du rayonnement solaire**
Glassubstrate beschichtet mit einer Häufung von dünnen Schichten, Anwendung für Glasscheiben mit Infrarot reflectierenden Eigenschaften und/oder mit sonnenstrahlungseigenschaften
Glass substrates coated with a stack of thin layers, application to glass sheets with infra-red radiation reflective properties and/or with solar radiation properties

(30) Priorité: 11.02.1993 FR 9301546
(43) Date de publication de la demande: 17.08.1994
(73) Titulaire: SAINT-GOBAIN VITRAGE, 92400 Courbevoie (FR)
(72) Inventeur: Koch, Stéphanie, F-92600 Asnières (FR); Rondeau, Véronique, F-93300 Aubervilliers (FR); Brochot, Jean-Pierre, F-75014 Paris (FR); Guiselin, Olivier, F-75017 Paris (FR)
(74) Mandataire: Muller, René

(56) Documents cités:
- EP-A- 0 303 109
- EP-A- 0 506 507
- WO-A-90/02653
- FR-A- 2 669 325
- US-A- 4 773 717
- CHEMICAL ABSTRACTS, vol. 112, no. 10, 5 Mars 1990, Columbus, Ohio, US; abstract no. 82819s, page 346 ;
- RESEARCH DISCLOSURE no. 336 , Avril 1992 , HAVANT GB page 262 XP304809 DISCLOSED ANONOYMOUSLY 'IMPROVING STABILITY OF HEAT MIRROR GLAZING COMPOSITES'

## Description

L'invention concerne les substrats transparents, notamment en verre, revêtus d'un empilement de couches minces comprenant au moins une couche métallique pouvant agir sur le rayonnement solaire et sur le rayonnement infra-rouge de grande longueur d'onde.

L'invention concerne également l'utilisation de tels substrats pour fabriquer des vitrages d'isolation thermique et/ou de protection solaire. Ceux-ci sont destinés aussi bien à équiper des bâtiments que des véhicules, en vue notamment de diminuer l'effort de climatisation et/ou de réduire une surchauffe excessive entraînée par l'importance toujours croîssante des surfaces vitrées dans l'habitacle.

Un type d'empilement de couches minces connu destiné à conférer au substrat des propriétés notamment de basse-émissivité est constitué d'au moins une couche métallique telle qu'une couche d'argent disposée entre deux couches de matériau diélectrique telles que des couches d'oxyde métallique. Cet empilement est généralement obtenu par une succession de dépôts effectués par une technique utilisant le vide, comme la pulvérisation cathodique éventuellement assistée par champ magnétique.

Si la couche d'argent détermine essentiellement les performances thermiques, notamment en terme d'émissivité du vitrage revêtu, les couches de matériau diélectrique remplissent plusieurs rôles puisqu'elles agissent tout d'abord sur l'aspect optique du substrat de manière interférentielle. Elles permettent en outre de protéger la couche d'argent des aggressions chimiques et/ou mécaniques.

Il est ainsi connu de la demande de brevet européen EP-A-0 226 993 un empilement comportant une couche d'argent intercalée entre deux couches d'un matériau diélectrique constitué d'un oxyde mixte d'étain et de zinc. Cet empilement présente en outre des couches très minces dites d'accrochage en métal, notamment en cuivre, disposées à l'interface entre la couche d'argent et chacune des couches d'oxyde afin d'en augmenter l'adhérence mutuelle, ce qui conduit à augmenter la durabilité globale de l'empilement .

Toujours dans l'optique d'améliorer la résistance à la corrosion de la couche d'argent, le brevet français FR-B-2 641 271 décrit un empilement où la couche d'argent est intercalée entre deux revêtements de matériau diélectrique, chacun de ces revêtements étant constitué d'une pluralité de couches d'oxyde métallique. Le revêtement sous-jacent à la couche d'argent se compose de trois couches d'oxyde superposées dont une couche d'oxyde d'étain, celle adjacente à la couche d'argent étant en oxyde de zinc et ayant d'après ce document un effet de protection de l'argent, notamment en le rendant moins vulnérable à l'attaque par l'oxygène. Par contre, l'épaisseur de la couche de zinc est faible, car l'oxyde de zinc, peu résistant par ailleurs, risquerait, en trop forte quantité, de fragiliser l'ensemble de l'empilement. Le brevet français FR-B-2 641 272 correspondant au brevet US -5,153,054 et dont l'enseignement est très proche du brevet français précédent, précise en outre que la présence d'une couche d'oxyde de zinc sur la couche métallique sacrificielle recouvrant la couche d'argent contribue également à la protéger de l'oxydation.

Le but de l'invention est de trouver un nouveau type d'empilement à couche(s) fonctionnelle(s) qui non seulement présente une durabilité satisfaisante, mais qui en outre ait des propriétés thermiques améliorées, notamment des valeurs d'émissivité plus faibles, sans que ce soit au détriment des propriétés optiques.

Un autre but de l'invention, éventuellement combiné au précédent, est d'obtenir ce même type d'empilement présentant des propriétés optiques améliorées, notamment des valeurs de transmission lumineuse plus élevées tout en gardant de bonnes propriétés thermiques.

La solution selon l'invention consiste en un substrat transparent, notamment en verre, muni d'un empilement de couches minces comportant au moins une couche métallique à propriétés dans le domaine du rayonnement solaire et/ou dans le domaine de l'infra-rouge, notamment basse-émissive, qui se trouve disposée entre deux revêtements à base de matériau diélectrique. Le dit empilement est conçu, selon l'invention, de manière à ce que le revêtement sous-jacent à cette couche métallique comporte au moins un revêtement de "mouillage" comprenant soit une couche à base d'oxyde de tantale soit une couche à base d'oxyde de niobium, éventuellement surmontée d'une fine couche à base de métal ou d'alliage métallique, tels que le nickel-chrome ou l'étain, et sous ce revêtement de mouillage, au moins une couche à base de nitrure ou d'oxyde métallique autre que l'oxyde de tantale ou l'oxyde de niobium.

La couche métallique qui présente les propriétés dans le domaine du rayonnement solaire et/ou dans l'infra-rouge est dans le cadre de l'invention de préférence basse-émissive et à base d'argent. Elle est ci-après désignée sous le terme de "couche fonctionnelle".

De manière tout à fait surprenante, si l'on compare les performances, en termes de propriétés optiques et thermiques, d'un empilement tel qu'ainsi défini avec celles d'un empilement comportant une même couche fonctionnelle de même épaisseur mais dépourvu de la couche de "mouillage" à base d'oxyde de tantale ou d'oxyde de niobium, on s'aperçoit que l'empilement selon l'invention présente une plus faible émissivité et même une transmission lumineuse plus élevée. Les auteurs de l'invention ont ainsi découvert que le choix de la nature des revêtements de matériau diélectrique, et tout particulièrement du revêtement sous-jacent à la couche fonctionnelle avait une influence non seulement sur la durabilité chimique et/ou physique de l'empilement protégeant la couche fonctionnelle, mais également sur les propriétés intrinsèques de celle-ci, comme sa valeur d'émissivité.

Pour expliquer ce phénomène, on peut avancer l'hypothèse que l'oxyde de tantale et l'oxyde de niobium sont particulièrement propices à une nucléation adéquate d'une couche de métal tel que l'argent et favoriseraient un meilleur mouillage, donc une croissance de la couche plus continue et présentant moins d'îlots distants les uns des autres en surface. Cela se traduirait par une exceptionnelle homogénéité et une meilleure continuité de cette couche, entraînant de ce fait une amélioration de ses performances.

On peut ainsi, suivant l'invention, établir toutes sortes de compromis judicieux, en fonction de l'épaisseur de la couche fonctionnelle mise en jeu et/ou des performances requises, puisque l'invention autorise notamment l'obtention de valeurs d'émissivité plus faibles à épaisseur de couche fonctionnelle identique, ou un niveau d'émissivité inchangé pour une épaisseur moindre.

Le grand avantage de l'invention réside dans le fait que ce type de compromis peut s'opérer sans que ce soit au détriment des performances optiques, notamment au niveau de la transmission lumineuse, ce qui est crucial aussi bien dans le domaine du bâtiment que de l'automobile par exemple. En effet, précédemment, on n'obtenait des valeurs d'émissivité moindres qu'en augmentant l'épaisseur de la couche fonctionnelle, en diminuant de ce fait la transmission lumineuse.

Le revêtement sous-jacent à la couche fonctionnelle comporte donc, outre le revêtement de mouillage précédemment évoqué, une couche mince à base d'oxyde métallique, tel que l'oxyde d'étain ou l'oxyde de titane, ou de nitrure, par exemple le nitrure de silicium. L'avantage de ce mode de réalisation est le suivant : on peut selon l'invention obtenir "l'effet de mouillage" voulu avec une épaisseur de couche d'oxyde de tantale ou d'oxyde de niobium qui peut être relativement faible. Par ailleurs, il est nécessaire de conserver au revêtement sous-jacent global une certaine épaisseur afin de conserver les effets interférentiels et de protection de la couche fonctionnelle. Comme la vitesse de dépôt de l'oxyde de tantale ou de niobium n'est pas extrêmement élevée, notamment lorsque le dépôt est effectué par une technique type pulvérisation cathodique, il est donc intéressant de déposer, sous ce revêtement de mouillage, une couche de diélectrique qui a une vitesse de dépôt nettement plus élevée, comme par exemple une couche d'oxyde d'étain. On peut ainsi réaliser l'invention sans pour autant ralentir les cadences de production de manière sensible. Par ailleurs, cela permet des gains en termes de coût de matière première, le niobium et le tantale dont les cibles de pulvérisation cathodique sont faites sont des métaux plus coûteux que l'étain, par exemple.

De préférence, on dépose en outre sur la couche fonctionnelle une couche métallique ou à base d'alliage métallique tel que le nickel-chrome qui est dite "sacrificielle", car son rôle est de protéger la couche fonctionnelle de l'oxydation lors du dépôt ultérieur du matériau diélectrique au-dessus d'elle, dépôt effectué usuellement par une pulvérisation cathodique réactive, c'est-à-dire en présence d'oxygène. Dans le produit final, cette couche sacrificielle est donc, selon son épaisseur et les conditions de dépôt, partiellement ou complètement oxydée.

Le revêtement de matériau diélectrique qui se trouve au-dessus de la couche fonctionnelle comporte avantageusement au moins une couche à base d'oxyde d'étain et/ou une couche à base d'oxyde de tantale et/ou une couche de nitrure de silicium. L'intérêt d'une combinaison constituée d'une couche d'oxyde d'étain surmontée d'une autre couche notamment d'oxyde de tantale ou d'une autre couche, est que, comme on l'a déjà mentionné, la vitesse de dépôt de l'oxyde d'étain est assez élevée. D'autre part, notamment l'oxyde de tantale est un oxyde assez dur et compact qui protège efficacement tout l'empilement de la corrosion. En dédoublant ainsi ce revêtement, on peut cumuler l'avantage d'une vitesse de production satisfaisante et celui d'un produit final extrêmement durable.

Concernant les épaisseurs des couches et revêtements de l'empilement selon l'invention, on préfère choisir une épaisseur de couche fonctionnelle comprise entre 7 et 12 nanomètres, une épaisseur globale de revêtement sous-jacent comprise entre 30 et 60 nanomètres et une épaisseur globale de revêtement au-dessus de la couche fonctionnelle comprise entre 30 et 60 nanomètres également.

Avantageusement, la couche à base d'oxyde de tantale ou d'oxyde de niobium faisant partie du revêtement "de mouillage" a une épaisseur comprise entre 5 et 30 nanomètres, de préférence entre 5 et 20 nanomètres, et notamment d'environ 10 nanomètres. Cette gamme d'épaisseurs est en effet suffisante pour obtenir l'effet recherché sur les propriétés de la couche fonctionnelle. De même, l'épaisseur de la couche sacrificielle est de préférence choisie comprise entre 0,3 et 8 nanomètres, notamment entre 1 et 3 nanomètres ou même d'environ 6 nanomètres. La couche optionnelle métallique qui peut surmonter la couche d'oxyde de tantale ou d'oxyde de niobium du revêtement de mouillage a une épaisseur comprise entre 0,3 et 1 nanomètre.

Toutes ces caractéristiques permettent d'aboutir à la fabrication de vitrages, notamment de vitrages multiples isolants, dont l'émissivité est inférieure ou égale à 0,08 et dont la transmission lumineuse peut rester élevée, elle peut notamment être supérieure ou égale à 75 % lorsqu'il s'agit de double-vitrages.

Il va de soi que les avantages de l'invention sont encore accentués lorsqu'on l'applique à des substrats présentant non pas une mais plusieurs couches fonctionnelles, par exemple deux couches fonctionnelles intercalées entre trois revêtements à base de matériau diélectrique. On munit alors avantageusement chacune des couches fonctionnelles du revêtement de mouillage selon l'invention.

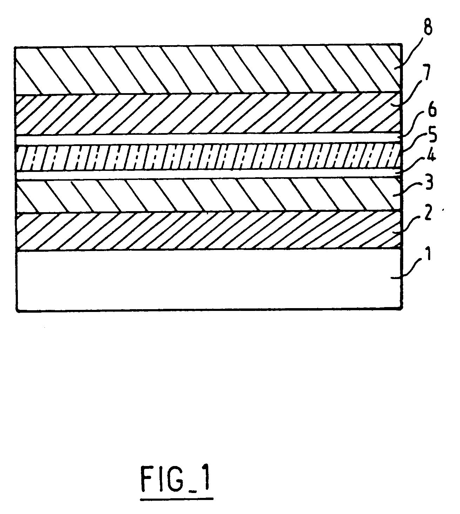

Les détails et caractéristiques avantageuses de l'invention vont maintenant ressortir des exemples suivants non limitatifs, à l'aide de la figure 1.

On précise que, dans ces exemples, les dépôts successifs de couches minces se font par une technique de pulvérisation cathodique assistée par champ magnétique, mais pourraient aussi être effectués par toute technique utilisant le vide et permettant une bonne maîtrise des épaisseurs de couche obtenues.

Les substrats sur lesquels sont déposés les empilements sont des substrats de verre silico-sodo-calcique de 4 millimètres d'épaisseur.

A la figure 1, le substrat en verre 1 est surmonté de la couche d'oxyde de tantale ou d'oxyde de niobium 3 qui, est disposée sur une couche d'oxyde d'étain 2 et sous une couche fine de nickel-chrome ou d'étain 4. Puis il y a la couche fonctionnelle à base d'argent 5, surmontée d'une couche sacrificielle 6 à base de nickel-chrome, au-dessus de laquelle sont disposées une couche d'oxyde d'étain 7 et/ou d'oxyde de tantale 8.

L'installation de dépôt comprend au moins une chambre de pulvérisation munie de cathodes équipées de cibles en matériaux appropriés sous lesquels le substrat 1 passe successivement. Ces conditions de dépôt par chacune des couches sont les suivantes :
- la couche 5 à base d'argent est déposée à l'aide d'une cible en argent, sous une pression de 8.10⁻³ mbar (0,8 Pa) dans une atmosphère d'argon,
- la ou les couches 2,7 à base de SnO₂ sont déposées par pulvérisation réactive à l'aide d'une cible d'étain, sous une pression de 8.10⁻³ mbar (0,8 Pa) et dans une atmosphère argon/oxygène dont 36 % volumique d'oxygène,
- la ou les couches 3,8 à base de TₐO₅ ou Nb₂O₅ sont déposées par pulvérisation réactive à l'aide d'une cible de tantale ou de niobium, sous une pression de 8.10⁻³ mbar (0,8 Pa) et dans une atmosphère argon/oxygène dont environ 10 % volumique d'oxygène,
- la ou les couches 4,6 à base de NiCr ou de Sn sont déposées à l'aide d'une cible en alliage nickel-chrome ou d'étain, toujours sous la même pression et dans une atmosphère d'argon.

Les densités de puissance et les vitesses de défilement du substrat sont ajustées de manière connue pour obtenir les épaisseurs de couche voulues.

Une première série d'exemples concerne l'utilisation du revêtement de "mouillage" selon l'invention comportant de l'oxyde de tantale :

### EXEMPLES 1 A 6

Ces exemples permettent de mettre en évidence l'amélioration, en termes de propriétés de basse-émissivité, qu'apporte l'invention.

L'exemple 1 est l'exemple comparatif, puisqu'il ne possède pas de revêtement de mouillage en oxyde de tantale.Les exemples 2 à 4 sont également des exemples comparatifs ne correspondant pas à l'invention telle que revendiquée.

Le tableau 1 ci-dessous résume la structure de chacun des empilements et précise l'épaisseur, en nanomètres, de chacune des couches en présence.

**TABLEAU 1**

| | Ex 1 | Ex 2 | Ex 3 | Ex 4 | Ex 5 | Ex 6 |
|---|---|---|---|---|---|---|
| SnO₂ (2) | 40 | - | - | - | 30 | 30 |
| Ta₂O₅ (3) | - | 38 | 38 | 38 | 10 | 10 |
| Ni-Cr (4) | 1 | 1 | 1 | 1 | 1 | 1 |
| Ag (5) | 9 | 9 | 7,9 | 9 | 9 | 9 |
| Ni-Cr (6) | 3 | 3 | 3 | 3 | 3 | 3 |
| SnO₂ (7) | 40 | - | - | 40 | - | 30 |
| Ta₂O₅ (8) | - | 38 | 38 | - | 38 | 10 |

Chacun des 6 substrats ainsi revêtus est ensuite monté en double-vitrage à l'aide d'un autre substrat en verre similaire (silico-sodo-calcique de 4 mm d'épaisseur) séparé du premier par une lame de gaz, ici de l'air, de 12 millimètres d'épaisseur.

Le tableau 2 ci-dessous indique, pour chacun des exemples, les valeurs de transmission lumineuse T_{L} en pourcentage, de transmission énergétique T_{E} en pourcentage, (mesurées d'après l'illuminant D₆₅) les valeurs de facteur solaire FS (sans unité, et qui correspond au rapport de l'énergie totale traversant le vitrage sur l'énergie solaire incidente), les valeurs de transmission thermique surfacique appelée facteur K et exprimée en W/m².K, et les valeurs d'émissivité ε sans unité.

**TABLEAU 2**

| Exemple | T_{L} | T_{E} | FS | K | ε |
|---|---|---|---|---|---|
| 1 | 74,4 | 52,6 | 0,64 | 1,77 | 0,09 |
| 2 | 77,9 | 55,2 | 0,64 | 1,72 | 0,06 |
| 3 | 77,5 | 58,2 | 0,68 | 1,76 | 0,08 |
| 4 | 76,9 | 54,1 | 0,64 | 1,75 | 0,07 |
| 5 | 76,6 | 54,6 | 0,64 | 1,74 | 0,07 |
| 6 | 75,6 | 52,9 | 0,64 | 1,76 | 0,08 |

Tous ces exemples ont donc, excepté l'exemple 3, la même épaisseur de couche d'argent 5, la même épaisseur de revêtement global sous-jacent 2, 3, 4 d'environ 40 nm et la même épaisseur de revêtement global 6, 7, 8 sur la couche d'argent 5, épaisseur également de l'ordre de 40 nanomètres.

Si l'on compare l'exemple 1 et l'exemple 4, dont la seule différence avec l'exemple 1 réside dans l'utilisation d'une couche de Ta₂O₅ au lieu d'une couche de SnO₂ sous la couche d'argent, on constate que la présence de cette couche de Ta₂O₅ (exemple 4) permet de faire chuter l'émissivité de 0,09 à 0,07, ce qui est une amélioration considérable. Cette chute d'émissivité est en outre accompagnée d'une augmentation de T_{L} de 74,4 à 76,9 %, augmentation également non négligeable et très avantageuse.

Les exemples 5 et 6, qui correspondent à l'invention, constituent un compromis, puisque le revêtement sous-jacent comprend, outre la couche de Ta₂O₅ une première couche de SnO₂.

Le point tout à fait étonnant est que, même en faible épaisseur, la couche de Ta₂O₅ continue à exercer une influence très favorable sur les propriétés de la couche d'argent, puisque son émissivité reste inférieure ou égale à 0,08. La T_{L} de ces deux exemples est toujours plus élevée que celle de l'exemple 1 comparatif. L'intérêt non négligeable de dédoubler ainsi le revêtement sous-jacent est que l'on peut ainsi diminuer les coûts de production, les cibles au tantale étant plus coûteuses que celles en étain, et contribuer à augmenter les cadences de production (il a été vérifié industriellement que la vitesse de dépôt de l'oxyde de tantale était moindre que celle de l'oxyde d'étain).

Tout dépend donc en fait du niveau de performance souhaité. Ainsi, les exemples 2 et 3 mettent en évidence que l'on peut encore améliorer les propriétés de l'empilement par la présence d'une couche 8 relativement épaisse de Ta₂O₅, sur la couche d'argent 5 : l'exemple 2, muni à la fois d'une couche de Ta₂O₅ sous l'argent de 38 nm et d'une couche de Ta₂O₅ sur l'argent de 40 nm, permet d'atteindre une émissivité exception-nellement basse de 0,06 pour une T_{L} qui est proche de 78 %.

Un autre choix peut consister à chercher à diminuer l'épaisseur de la couche d'argent 5 sans détériorer les propriétés de l'empilement. Ainsi, l'exemple 3 montre qu'avec une diminution de l'épaisseur de la couche d'argent d'environ 12 %, la présence de deux couches de Ta₂O₅ permet de conserver une émissivité faible de 0,08 et une T_{L} élevée proche de 78 %. Par ailleurs, la valeur de T_{E} de l'exemple 3 est sensiblement plus élevée que celle de l'exemple 1, alors même que les valeurs d'émissivité sont proches, ce qui est très avantageux en terme de gain de chaleur global de l'habitacle qui serait équipé de ce type de vitrage.

Il est à noter en outre que la présence d'une couche de Ta₂O₅ sur la couche d'argent, associée ou non à une couche d'étain, contribue à améliorer très sensiblement la durabilité chimique et physique de l'empilement.

### EXEMPLES 7 A 12

Afin de mieux analyser l'influence respective de la couche 3 de Ta₂O₅ et de la couche 4 de Ni-Cr sous la couche 5 d'argent, on a réalisé une seconde série d'exemples 7 à 12, ces empilements étant cette fois dépourvus des couches 7, 8 d'oxyde sur la couche 5 d'argent.

L'exemple 7 est l'exemple comparatif dépourvu de couche de Ta₂O₅ sous la couche 5 d'argent.L'exemple 8 est également un exemple comparatif ne correspondant pas à l'invention telle que revendiquée.

La constitution et les épaisseurs en nanomètres des couches de ces exemples sont rassemblées dans le tableau 3 ci-dessous.

**TABLEAU 3**

| | SnO₂(2) | Ta₂O₅(3) | NiCr(4) | Ag(5) | NiCr(6) |
|---|---|---|---|---|---|
| Ex. 7 | 40 | - | 1 | 9 | 3 |
| Ex. 8 | - | 38 | - | 9 | 3 |
| Ex. 9 | 35 | 5 | - | 9 | 3 |
| Ex. 10 | 32,5 | 7,5 | - | 9 | 3 |
| Ex. 11 | 40 | 10 | - | 9 | 3 |
| Ex. 12 | 25 | 15 | - | 9 | 3 |

Pour évaluer les performances de ces empilements, on a cette fois mesuré par la méthode des 4 points la résistance superficielle R_{□} , exprimée en ohms par carré, de ces derniers.

Les résultats sont indiqués dans le tableau 4 ci-dessous.

**TABLEAU 4**

| Exemples | R_{□} |
|---|---|
| 7 | 8,0 |
| 8 | 6,5 |
| 9 | 7,8 |
| 10 | 7,5 |
| 11 | 7,2 |
| 12 | 7,2 |

Sachant que l'on peut considérer que la résistance carrée est, avec une bonne approximation, proportionnelle à l'émissivité, on constate de nouveau que la couche de Ta₂O₅ sous-jacente apporte une amélioration sensible, même, comme c'est le cas pour les exemples 9 et 10, lorsqu'elle n'a qu'une faible épaisseur.

Ces exemples montrent également que la couche 4 en NiCr n'est qu'optionnelle et que la couche de Ta₂O₅ à elle seule suffit pour induire de fortes améliorations des propriétés optiques de la couche d'argent.

Par ailleurs, une analyse par microscopie à force atomique a permis de donner des indications quant à l'état de surface des couches d'argent. Cette analyse a été réalisée sur des surfaces de deux micromètres carré. Elle a tout d'abord été effectuée sur la couche d'argent (5) d'un empilement 7' identique à l'exemple 7 mis à part qu'il est dépourvu de la couche de NiCr (4), puis sur la couche d'argent (5) de l'empilement selon l'exemple 8.

Le tableau 5 ci-dessous donne les résultats d'analyse en précisant les valeurs, en nanomètres, des hauteurs pic-vallée ("peak-to-valley" en anglais) ainsi que la dimension latérale moyenne des amas toujours en nanomètres (d.l.m) présents à la surface de la couche.

**TABLEAU 5**

| Exemples | pic-vallée | d.l.m |
|---|---|---|
| 7' | 11,3 | 30 |
| 8 | 10,0 | 70 |

On peut interpréter ces chiffres de la manière suivante : déposer une couche d'argent sur une couche de Ta₂O₅ (exemple 8) plutôt que sur une couche de SnO₂ permet de diminuer légèrement la rugosité de l'état de surface de l'argent, de par des valeurs pic-vallée un peu plus faibles. Par contre, on augmente parallèlement de manière très importante la largeur des amas ou agrégats. Cette augmentation traduirait l'effet de mouillage mis en évidence dans l'invention, dans la mesure où des amas "plus larges" confèrent à la couche une continuité de surface bien meilleure, entraînant de ce fait des performances, notamment de conductivité électrique, améliorées.

L'exemple suivant concerne l'utilisation du revêtement de "mouillage" selon l'invention comportant cette fois de l'oxyde de niobium :

### EXEMPLE 13 :

Le tableau 6 ci-dessus résume la structure de l'empilement selon cet exemple et précise l'épaisseur de chacune des couches, en nanomètres toujours :

**TABLEAU 6**

| | Exemple 13 |
|---|---|
| SnO₂ (2) | 35 |
| Nb₂O₅ (3) | 10 |
| Sn (4) | 1 |
| Ag (5) | 10 |
| Ni-Cr (6) | 6 |
| SnO₂ (7) | 45 |

Dans ce type d'empilement, la couche 6 en Ni-Cr surmontant la couche d'argent (5) est plus épaisse que dans les exemples précédents, ce qui a pour effet d'abaisser un peu la transmission lumineuse de l'ensemble du substrat porteur muni de l'empilement, à une valeur inférieure à 70 %, et notamment aux environs de 60-65 %. De fait, certaines utilisations peuvent effectivement nécessiter des vitrages à transmission lumineuse plus faible. L'effet de l'oxyde de niobium (3) sous-jacent a sur les performances et le "nappage" de la couche d'argent (5) un effet très semblable à celui de l'oxyde de tantale, et est donc au moins aussi efficace, avec, sur l'oxyde de tantale, un léger avantage en termes de coût de matières premières.

En conclusion, l'invention a mis au point deux nouveaux types de revêtement diélectrique sous-jacent à une couche fonctionnelle, revêtements qui agissent favorablement sur les propriétés de cette dernière et sont de grande souplesse de mise en oeuvre.

## Revendications

1. Substrat transparent (1), notamment en verre, muni d'un empilement de couches minces comportant au moins une couche (5) métallique à propriétés dans l'infra-rouge, notamment basse émissive, disposée entre deux revêtements à base de matériau diélectrique, caractérisé en ce que le revêtement sous-jacent à la couche (5) à propriétés dans l'infra-rouge comporte au moins un revêtement de mouillage qui est adjacent à ladite couche (5) et qui comprend une couche (3) soit à base d'oxyde de tantale, soit à base d'oxyde de niobium, et, sous ce revêtement de mouillage, au moins une couche mince (2) à base de nitrure ou d'oxyde métallique autre que l'oxyde de tantale ou l'oxyde de niobium.

2. Substrat selon la revendication 1, caractérisé en ce que le revêtement de mouillage comprend une couche (3) à base d'oxyde de tantale ou à base d'oxyde de niobium surmontée d'une couche (4) à base de métal ou d'alliage métallique d'une épaisseur comprise entre 0,3 et 1 nanomètre.

3. Substrat selon la revendication 2, caractérisé en ce que la couche (5) à propriétés dans l'infra-rouge est à base d'argent.

4. Substrat selon l'une des revendications 2 ou 3, caractérisé en ce que la couche (4) à base de métal ou d'alliage métallique du revêtement de mouillage est en alliage nickel-chrome ou en étain.

5. Substrat selon l'une des revendications précédentes caractérisé en ce que le revêtement sous-jacent à la couche (5) métallique à propriétés dans l'infra-rouge comporte sous le revêtement de mouillage au moins une couche (2) mince à base d'oxyde métallique, notamment une couche à base d'oxyde d'étain ou d'oxyde de titane ou à base de nitrure tel que le nitrure de silicium.

6. Substrat selon l'une des revendications précédentes, caractérisé en ce que la couche (5) à propriétés dans l'infra-rouge est recouverte d'une couche (6) sacrificielle à base de métal ou d'alliage métallique tel qu'un alliage nickel-chrome, notamment d'une épaisseur comprise entre 0,3 et 8 nanomètres.

7. Substrat selon l'une des revendications précédentes, caractérisé en ce que le revêtement à base de matériau diélectrique au-dessus de la couche (5) métallique à propriétés dans l'infra-rouge comporte au moins une couche mince d'oxyde métallique, notamment une couche (7) à base d'oxyde d'étain et/ou une couche (8) à base d'oxyde de tantale et/ou une couche de nitrure de silicium.

8. Substrat selon l'une des revendications précédentes, caractérisé en ce que la couche (5) à propriétés dans l'infra-rouge a une épaisseur comprise entre 7 et 12 nanomètres.

9. Substrat selon l'une des revendications précédentes, caractérisé en ce que le revêtement sous-jacent à la couche (5) à propriétés dans l'infra-rouge a une épaisseur totale comprise entre 30 et 60 nanomètres.

10. Substrat selon l'une des revendications précédentes, caractérisé en ce que la couche (3) à base d'oxyde de tantale ou d'oxyde de niobium appartenant au revêtement de mouillage a une épaisseur comprise entre 5 et 30 nanomètres, de préférence entre 5 et 20 nanomètres et notamment d'environ 10 nanomètres.

11. Substrat selon l'une des revendications précédentes, caractérisé en ce que le revêtement (6, 7) en matériau diélectrique au-dessus de la couche (5) métallique à propriétés dans l'infra-rouge a une épaisseur totale comprise entre 30 et 60 nanomètres.

12. Substrat selon l'une des revendications précédentes, caractérisé en ce qu'il est muni d'un empilement de couches minces comportant deux couches (5) métalliques à propriétés dans l'infra-rouge.

13. Application du substrat selon l'une des revendications précédentes à un vitrage multiple bas-émissif, notamment présentant une émissivité inférieure ou égale à 0,08, et présentant une haute transmission lumineuse T_{L} notamment supérieure ou égale à 75 %, ou présentant une transmission inférieure ou égale à 70 %, notamment d'environ 60 à 65 %.

## Claims

1. Transparent and in particular glass substrate (1), provided with a stack of thin coatings having at least one metal coating (5) with properties in the infrared and in particular of a low emissive nature, placed between two layers based on dielectric material, characterized in that the layer below the coating (5) having properties in the infrared has at least one wetting layer adjacent to said coating (5) and comprising a coating (3) either based on tantalum oxide, or based on niobium oxide, and, beneath said wetting layer, at least one thin coating (2) based on metal oxide or nitride other than tantalum oxide or niobium oxide.

2. Substrate according to claim 1, characterized in that the wetting layer comprises a coating (3) based on tantalum oxide or niobium oxide surmounted by a metal alloy or metal-based coating (4) with a thickness between 0.3 and 1 nanometre.

3. Substrate according to claim 2, characterized in that the coating (5) having properties in the infrared is based on silver.

4. Substrate according to either of the claims 2 and 3, characterized in that the metal or metal alloy-based coating (4) of the wetting layer is of tin or nickel-chromium alloy.

5. Substrate according to any one of the preceding claims, characterized in that the layer below the metal coating (5) having properties in the infrared has, beneath the wetting layer, at least one thin, metal oxide-based coating (2) and in particular a coating based on tin oxide or titanium oxide or based on nitride, such as silicon nitride.

6. Substrate according to any one of the preceding claims, characterized in that the coating (5) having properties in the infrared is covered with a metal alloy or metal-based sacrificial coating (6) such as of a nickel-chromium alloy, particularly having a thickness between 0.3 and 8 nanometres.

7. Substrate according to any one of the preceding claims, characterized in that the dielectric material-based layer above the metal coating (5) having properties in the infrared has at least one thin, metal oxide coating, particularly a coating (7) based on tin oxide and/or a coating (8) based on tantalum oxide and/or a silicon nitride coating.

8. Substrate according to any one of the preceding claims, characterized in that the coating (5) having properties in the infrared has a thickness between 7 and 12 nanometres.

9. Substrate according to any one of the preceding claims, characterized in that the layer below the coating (5) having properties in the infrared has a total thickness between 30 and 60 nanometres.

10. Substrate according to any one of the preceding claims, characterized in that the tantalum or niobium oxide-based coating (3) belonging to the wetting layer has a thickness between 5 and 30 nanometres, preferably between 5 and 20 nanometres and particularly approximately 10 nanometres.

11. Substrate according to any one of the preceding claims, characterized in that the dielectric material layer (6, 7) above the metal coating (5) having properties in the infrared has a total thickness between 30 and 60 nanometres.

12. Substrate according to any one of the preceding claims, characterized in that it is provided with a stack of thin coatings including two metal coatings (5) having properties in the infrared.

13. Application of the substrate according to any one of the preceding claims, to a low emissive multiple glazing, particularly having an emissivity equal to or below 0.08 and having a high light transmission T_{L} in particular equal to or above 75%, or having a transmission equal to or below 70%, particularly approximately 60 to 65%.

## Patentansprüche

1. Transparentes Substrat (1), welches insbesondere aus Glas besteht und mit einem Aufbau aus dünnen Schichten versehen ist, der wenigstens eine Metalischicht (5) mit Eigenschaften, speziell einem niedrigen Emissionsvermögen, im Infrarot enthält, die zwischen zwei Beschichtungen auf der Grundlage eines dielektrischen Materials angeordnet ist, **dadurch gekennzeichnet, daß** die unter der Schicht (5) mit Eigenschaften im Infrarot befindliche Beschichtung mindestens eine Benetzungsbeschichtung, die an diese Schicht (5) angrenzt und eine Schicht (3) entweder auf der Grundlage von Tantal- oder von Nioboxid enthält, und unter der Benetzungsbeschichtung mindestens eine dünne Schicht (2) auf der Grundlage eines Metallnitrids oder Metalloxids, das kein Tantal- oder Nioboxid ist, umfaßt.

2. Substrat nach Anspruch 1, **dadurch gekennzeichnet, daß** die Benetzungsbeschichtung eine Schicht (3) auf der Grundlage von Tantal- oder Nioboxid enthält, welche von einer Schicht (4) auf der Grundlage eines Metalls oder einer Metallegierung mit einer Dicke von 0,3 bis 1 Nanometer bedeckt ist.

3. Substrat nach Anspruch 2, **dadurch gekennzeichnet, daß** die Schicht (5) mit Eigenschaften im Infrarot Silber zur Grundlage hat.

4. Substrat nach Anspruch 2 oder 3, **dadurch gekennzeichnet, daß** die Schicht (4) auf der Grundlage eines Metalls oder einer Metallegierung der Benetzungsbeschichtung aus einer Chromnickellegierung oder Zinn besteht.

5. Substrat nach einem der vorhergehenden Ansprüche, **dadurch gekennzeichnet, daß** die unter der Metallschicht (5) mit Eigenschaften im Infrarot befindliche Beschichtung unter der Benetzungsbeschichtung mindestens eine dünne Schicht (2) auf der Grundlage eines Metalloxids, insbesondere eine Schicht auf der Grundlage von Zinn- bzw. Titanoxid, oder eines Nitrids wie Siliciumnitrid enthält.

6. Substrat nach einem der vorhergehenden Ansprüche, **dadurch gekennzeichnet, daß** die Schicht (5) mit Eigenschaften im Infrarot mit einer insbesondere 0,3 bis 8 Nanometer dicken Schutzschicht (6) auf der Grundlage eines Metalls oder einer Metallegierung wie einer Chromnickellegierung bedeckt ist.

7. Substrat nach einem der vorhergehenden Ansprüche, **dadurch gekennzeichnet, daß** die über der Metallschicht (5) mit Eigenschaften im Infrarot befindliche Beschichtung auf der Grundlage eines dielektrischen Materials mindestens eine dünne Metalloxidschicht, insbesondere eine Schicht (7) auf der Grundlage von Zinnoxid und/oder eine Schicht (8) auf der Grundlage von Tantaloxid, und/oder eine Siliciumnitridschicht enthält.

8. Substrat nach einem der vorhergehenden Ansprüche, **dadurch gekennzeichnet, daß** die Schicht (5) mit Eigenschaften im Infrarot 7 bis 12 Nanometer dick ist.

9. Substrat nach einem der vorhergehenden Ansprüche, **dadurch gekennzeichnet, daß** die unter der Schicht (5) mit Eigenschaften im Infrarot befindliche Beschichtung insgesamt 30 bis 60 Nanometer dick ist.

10. Substrat nach einem der vorhergehenden Ansprüche, **dadurch gekennzeichnet, daß** die zur Benetzungsbeschichtung gehörende Schicht (3) auf der Grundlage von Tantal- oder Nioboxid eine Dicke von 5 bis 30 Nanometer, vorzugsweise 5 bis 20 Nanometer und insbesondere von etwa 10 Nanometern besitzt.

11. Substrat nach einem der vorhergehenden Ansprüche, **dadurch gekennzeichnet, daß** die über der Metalischicht (5) mit Eigenschaften im Infrarot befindliche Beschichtung (6, 7) aus dielektrischem Material insgesamt 30 bis 60 Nanometer dick ist.

12. Substrat nach einem der vorhergehenden Ansprüche, **dadurch gekennzeichnet, daß** es mit einem Aufbau aus dünnen Schichten versehen ist, der zwei Metallschichten (5) mit Eigenschaften im Infrarot umfaßt.

13. Verwendung des Substrats nach einem der vorhergehenden Ansprüche in einer Mehrfachverglasung mit niedrigem Emissionsvermögen, die insbesondere einen Emissionskoeffizienten von kleiner oder gleich 0,08 und einen hohen Lichttransmissionsgrad T_{L} von speziell größer oder gleich 75 % oder von kleiner oder gleich 70 % und insbesondere von etwa 60 bis 65 % aufweist.
